# EUROPEAN PATENT APPLICATION

(11) **EP 3 929 426 A1**
(43) Date of publication of application: **29.12.2021**
(21) Application number: 20198930.8
(22) Date of filing: 29.09.2020
(51) Int. Cl.: F02M 26/06, F02D 41/00, B60W 30/18, F02B 29/04, F02D 41/12

(54) **APPARATUS AND METHOD FOR CONTROLLING LOW-PRESSURE EXHAUST GAS RECIRCULATION SYSTEM FOR FREEZING PREVENTION**

(30) Priority: 22.06.2020 KR 20200075603
(71) Applicant: HYUNDAI MOTOR COMPANY, Seoul 06797 (KR); Kia Corporation, Seocho-gu Seoul 06797 (KR)
(72) Inventor: KIM, Jin Ha, 06797 Seoul (KR)
(74) Representative: Viering, Jentschura & Partner mbB Patent- und Rechtsanwälte

(57) **Abstract**

An apparatus for controlling a low-pressure exhaust gas recirculation (LP-EGR) system for freezing prevention includes an intake air temperature sensor configured to measure a temperature of intake air introduced from outside, at least one engine driving sensor used to diagnose and learn a driving state of an engine, the LP-EGR system configured such that at least a portion of exhaust gas flows into the LP-EGR system as intake air, and a controller configured to perform diagnosis and learning of the driving state of the engine using the at least one engine driving sensor or to operate the LP-EGR system depending on the temperature of the intake air measured by the intake air temperature sensor when coasting conditions of a vehicle are satisfied.

## Description

### BACKGROUND

### (a) Technical Field

The present disclosure relates to an apparatus and method for controlling a low-pressure exhaust gas recirculation (LP-EGR) system for freezing prevention, more particularly, to controlling operation of the LP-EGR system so as to prevent freezing of an intake line and an intake system in a state in which an intake air temperature is a low temperature or an extremely low temperature during coasting.

### (b) Description of the Related Art

An engine for a vehicle generates driving force by combusting a mixture of air introduced from the outside and fuel at an appropriate ratio.

During a process of generating driving force by driving the engine, a sufficient amount of external air for combustion must be supplied in order to acquire a desired output and combustion efficiency. For this purpose, a turbocharger is utilized as an apparatus for executing over-supply of air for combustion in order to increase the combustion efficiency of the engine.

In general, the turbocharger rotates a turbine using pressure of exhaust gas discharged from the engine, and then supplies air of a high pressure to combustion chambers using rotary power of the turbine, thereby increasing output of the engine. The turbocharger is applicable to diesel engines and gasoline engines.

Further, an exhaust gas recirculation (EGR) system is mounted in a vehicle in order to reduce harmful exhaust gas. In general, generation of NOₓ increases when the proportion of air in a mixture is high and thus the mixture is easily combusted. Therefore, the EGR system mixes a portion (for example, 5-20%) of exhaust gas, discharged from an engine, with the mixture again so as to reduce the amount of oxygen in the mixture and thus to impede combustion, thereby suppressing generation of NOₓ.

The EGR system of the engine is mounted in the vehicle so as to improve fuel efficiency. Through the EGR system, pumping loss in a low-speed/low-load region may be reduced, and ignition timing of the engine due to reduction in the temperature of the combustion chambers in a middle-speed/middle-load region may be advanced, thereby being capable of improving the fuel efficiency of the vehicle.

As a representative EGR system used in engines, there is a low-pressure exhaust gas recirculation (LP-EGR) system. The LP-EGR system recirculates exhaust gas having passed through a turbine of a turbocharger to an intake passage at the front end of a compressor.

However, when the LP-EGR system is operated, exhaust gas flowing into an intake line contains vapor and thus the vapor (condensate water) is located within an intake system, and when the temperature of intake air is a low temperature during coasting in the state in which the vapor remains in the intake line, the vapor (condensation water) is frozen in the intake system.

The above information disclosed in this Background section is only for enhancement of understanding of the background of the disclosure and therefore it may contain information that does not form the prior art that is already known in this country to a person of ordinary skill in the art.

### SUMMARY

The present disclosure provides technology for operating a low-pressure exhaust gas recirculation (LP-EGR) system so as to prevent freezing of an intake line during coasting.

The present disclosure also provides technology which not only performs diagnosis and learning of a driving state of an engine but also operates the LP-EGR system.

In one aspect, the present disclosure provides a method for controlling a low-pressure exhaust gas recirculation (LP-EGR) system for freezing prevention, including measuring, by an intake air temperature sensor, an intake air temperature during coasting of a vehicle; determining, by a controller, whether or not the intake air temperature is less than or equal to a first reference value and greater than a second reference value; performing, by the controller, diagnosis and learning of a driving state of an engine through the engine driving sensors when the intake air temperature is less than or equal to the first reference value and greater than the second reference value; and operating, by the controller, the LP-EGR system in a coasting section when the diagnosis and learning of the driving state of the engine through the engine driving sensors have been completed.

In a preferred embodiment, the performing the diagnosis and learning of the driving state of the engine through the engine driving sensors may include determining whether or not a number of times of the diagnosis and learning of the driving state of the engine through the engine driving sensors exceeds a predetermined number after starting of the engine, and completing measurement of the intake air temperature when the number of times of the diagnosis and learning of the driving state of the engine through the engine driving sensors exceeds the predetermined number.

In another preferred embodiment, the determining whether or not the intake air temperature is less than or equal to the first reference value and greater than the second reference value may include operating the LP-EGR system when the intake air temperature is less than or equal to the second reference value.

In another aspect, the present disclosure provides an apparatus for controlling an LP-EGR system for freezing prevention, including an intake air temperature sensor configured to measure a temperature of intake air introduced from outside, at least one engine driving sensor used to diagnose and learn a driving state of an engine, the LP-EGR system configured such that at least a portion of exhaust gas flows into the LP-EGR system as intake air, and a controller configured to perform diagnosis and learning of the driving state of the engine using the at least one engine driving sensor or to operate the LP-EGR system depending on the temperature of the intake air measured by the intake air temperature sensor when coasting conditions of a vehicle are satisfied.

In a preferred embodiment, the at least one engine driving sensor may include at least one of an air flow sensor, an oxygen sensor, a NOx sensor, a mass air flow sensor or a lambda sensor.

In another preferred embodiment, the controller may perform the diagnosis and learning of the driving state of the engine using the at least one engine driving sensor when the intake air temperature is less than or equal to a first reference value and greater than a second reference value, and operate the LP-EGR system in a state in which the diagnosis and learning of the driving state of the engine through the at least one engine driving sensor have been completed.

In still another preferred embodiment, the controller may operate the LP-EGR system when the intake air temperature measured by the intake air temperature sensor is less than or equal to the second reference value.

Other aspects and preferred embodiments of the disclosure are discussed infra.

### BRIEF DESCRIPTION OF THE DRAWINGS

The above and other features of the present disclosure will now be described in detail with reference to certain exemplary embodiments thereof illustrated in the accompanying drawings which are given hereinbelow by way of illustration only, and thus are not limitative of the present disclosure, and wherein:
FIG. 1 is a schematic diagram of an engine including an LP-EGR system according to one embodiment of the present disclosure;
FIG. 2 is a block diagram of an apparatus for controlling an LP-EGR system for freezing prevention according to one embodiment of the present disclosure;
FIG. 3 is a view illustrating a control sequence of the LP-EGR system for freezing prevention during coasting of a vehicle according to one embodiment of the present disclosure;
FIG. 4 is a graph showing data indicating the temperature rising effect on an intake line through the apparatus according to one embodiment of the present disclosure; and
FIG. 5 is a flowchart illustrating a method for controlling an LP-EGR system for freezing prevention according to one embodiment of the present disclosure.

It should be understood that the appended drawings are not necessarily to scale, presenting a somewhat simplified representation of various preferred features illustrative of the basic principles of the disclosure. The specific design features of the present disclosure as disclosed herein, including, for example, specific dimensions, orientations, locations, and shapes, will be determined in part by the particular intended application and use environment.

In the figures, reference numbers refer to the same or equivalent parts of the present disclosure throughout the several figures of the drawings.

### DETAILED DESCRIPTION

It is understood that the term "vehicle" or "vehicular" or other similar term as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, plug-in hybrid electric vehicles, hydrogen-powered vehicles and other alternative fuel vehicles (e.g., fuels derived from resources other than petroleum). As referred to herein, a hybrid vehicle is a vehicle that has two or more sources of power, for example both gasoline-powered and electric-powered vehicles.

The terminology used herein is for the purpose of describing particular embodiments only and is not intended to be limiting of the disclosure. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Throughout the specification, unless explicitly described to the contrary, the word "comprise" and variations such as "comprises" or "comprising" will be understood to imply the inclusion of stated elements but not the exclusion of any other elements. In addition, the terms "unit", "-er", "-or", and "module" described in the specification mean units for processing at least one function and operation, and can be implemented by hardware components or software components and combinations thereof.

Further, the control logic of the present disclosure may be embodied as non-transitory computer readable media on a computer readable medium containing executable program instructions executed by a processor, controller or the like. Examples of computer readable media include, but are not limited to, ROM, RAM, compact disc (CD)-ROMs, magnetic tapes, floppy disks, flash drives, smart cards and optical data storage devices. The computer readable medium can also be distributed in network coupled computer systems so that the computer readable media is stored and executed in a distributed fashion, e.g., by a telematics server or a Controller Area Network (CAN).

Hereinafter reference will be made in detail to various embodiments of the present disclosure, examples of which are illustrated in the accompanying drawings and described below. While the disclosure will be described in conjunction with exemplary embodiments, it will be understood that the present description is not intended to limit the disclosure to the exemplary embodiments. On the contrary, the disclosure is intended to cover not only the exemplary embodiments, but also various alternatives, modifications, equivalents and other embodiments, which may be within the spirit and scope of the disclosure as defined by the appended claims.

Further, in the following description of the embodiments, it will be understood that the suffixes "engine", "part" and "system" indicate units for processing at least one function or operation, and may be implemented using hardware, software, or a combination of hardware and software.

In addition, in the following description of the embodiments, terms, such as "first" and "second", may be only used to distinguish one element, component, region, layer or section from another region, layer or section, and do not imply a sequence or order unless clearly indicated by the context.

In the following description of the embodiments, the same or corresponding elements are denoted by the same reference numerals even when they are depicted in different drawings, and a detailed description thereof will thus be omitted.

The present disclosure relates to an apparatus and method for controlling a low-pressure exhaust gas recirculation (LP-EGR) system 100 for freezing prevention which control operation of the LP-EGR system 100 in a coasting situation of an engine 20, and according to one embodiment of the present disclosure, to an apparatus and method for operating the LP-EGR system 100 so as to prevent freezing of an intake line 10 of the engine 20 together with operation of engine driving sensors 22 configured to measure the state conditions of the engine 20.

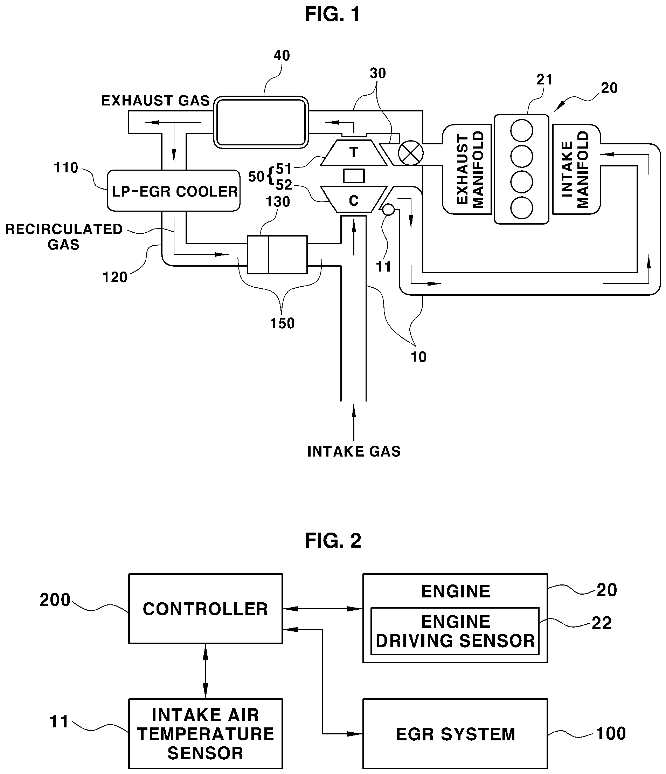

An exhaust gas recirculation (EGR) system shown in FIG. 1 is mounted in a vehicle so as to reduce harmful exhaust gas. In general, generation of NOₓ increases when the proportion of air in a mixture is high and thus the mixture is easily combusted. Therefore, the EGR system mixes a portion (for example, 5-20%) of exhaust gas, discharged from the engine 20, with the mixture again so as to reduce the amount of oxygen in the mixture and thus to impede combustion, thereby suppressing generation of NOₓ.

The EGR system of the engine 20 is mounted in the vehicle so as to improve fuel efficiency. Through the EGR system, pumping loss in a low-speed/low-load region may be reduced, and ignition timing of the engine 20 due to reduction in the temperature of combustion chambers in a middle-speed/middle-load region may be advanced, thereby being capable of improving the fuel efficiency of the vehicle.

As a representative EGR system used in the engine 20, there is the low-pressure exhaust gas recirculation (LP-EGR) system 100. The LP-EGR system 100 recirculates exhaust gas having passed through a turbine 51 of a turbocharger 50 to an intake passage at the front end of a compressor.

Further, an LP-EGR cooler 110 is provided so as to lower the temperature of exhaust gas flowing into the LP-EGR system 100, and the LP-EGR cooler 110 is configured such that cooling water flows into the LP-EGR cooler 110 so as to surround the cooling water.

An engine system having the LP-EGR system 100 according to one embodiment of the present disclosure includes the engine 20, the turbocharger 50, the LP-EGR system 100, a flow regulator, and a controller 200.

The engine 20 includes a plurality of combustion chambers which generate driving force through combustion of fuel. An intake line 10 in which intake gas supplied to the combustion chambers flows and an exhaust line 30 in which exhaust gas discharged from the combustion chambers flows are provided around the engine 20.

An exhaust gas aftertreatment apparatus 40 which removes various harmful substances from the exhaust gas discharged from the combustion chambers is provided on the exhaust line 30. According to one embodiment of the present disclosure, a warm-up catalytic converter (WCC) is used as the exhaust gas aftertreatment apparatus 40 so as to remove nitrogen oxides, carbon sediments and particulate matter (PM) from the exhaust gas.

The turbocharger 50 compresses intake gas (fresh intake air + recirculated gas) introduced through the intake line 10 and supplies the compressed intake gas to the combustion chambers. The turbocharger 50 includes the turbine 51 provided on the exhaust line 30 and rotated by the exhaust gas discharged from the combustion chambers, and a compressor 52 rotated by interworking with the rotation of the turbine 51 so as to compress intake gas.

The LP-EGR system 100 includes a recirculation line 120, the LP-EGR cooler 110, an LP-EGR valve 130, an EM filter, and the flow regulator.

The recirculation line 120 branches off from the exhaust line 30 at the rear of the turbocharger 50, and joins the intake line 10. The LP-EGR cooler 110 is disposed on the recirculation line 120 and cools recirculated gas (exhaust gas) flowing along the recirculation line 120. The flow regulator is installed on the recirculation line 120, and regulates the amount of exhaust gas flowing along the recirculation line 120. That is, the flow regulator is configured to control the opening degree of the LP-EGR valve 130 by interworking with the controller 200.

The LP-EGR valve 130, which is opened and closed so as to control the flow rate of recirculated gas (exhaust gas) flowing into the LP-EGR system 100, is provided at one end of the LP-EGR cooler 130.

FIG. 2 is a block diagram of an apparatus for controlling the LP-EGR system 100 for freezing prevention according to one embodiment of the present disclosure.

The apparatus for controlling the LP-EGR system 100 for freezing prevention according to one embodiment of the present disclosure includes the engine 20 including the engine driving sensors 22, an intake air temperature sensor 11, the LP-EGR system 100, and the controller 200.

The LP-EGR system 100 is configured to be operated when the engine 20 is driven, and remains in the stopped state thereof in the coasting situation of the vehicle, in which the driving force of the engine 20 is not required. However, according to one embodiment of the present disclosure, the controller 200 is configured to forcibly operate the LP-EGR system 100 in the coasting situation of the vehicle, when designated conditions are satisfied. The designated conditions are determined depending on the driving environment of the vehicle, and thus, a control method of the LP-EGR system 100 is determined depending on whether or not the intake air temperature of the vehicle is less than or equal to a first reference value or is less than or equal to a second reference value in the coasting situation of the vehicle.

In the present disclosure, a situation in which the temperature of intake air is less than or equal to the first reference value and greater than the second reference value is classified into a low temperature state, and a situation in which the temperature of the intake air is less than or equal to the second reference value is classified into an extremely low temperature.

Further, in one embodiment of the present disclosure, the first reference value is set to be higher than the second reference value, and is stored in the controller 200. Here, coasting of the vehicle means that the vehicle is driven using only inertial force without being additionally accelerated in consideration of a distance from a preceding vehicle and traffic signals. Excessive repetition of speeding and braking increases fuel consumption and thus lowers fuel efficiency, and when coasting of the vehicle is used, the vehicle is capable of being stably driven without unnecessary acceleration and fuel efficiency may be improved.

The engine 20 includes a plurality of engine cylinders, into which fresh intake air flowing along the intake line 10, exhaust gas, and fuel flowing through a fuel tank are introduced. Each of the engine cylinders includes at least one engine driving sensor 22 and, for example, may include at least one of an air flow sensor configured to measure the amount of air introduced into the engine 20, an oxygen sensor configured to measure the concentration of oxygen, a NOx sensor configured to measure the amount of generated NOx, a mass air flow sensor configured to measure the amount of air introduced into the engine 20, an offset sensor configured to measure the angle of delay of ignition of the engine cylinder, or a lambda sensor.

The engine driving sensors 22 are configured to diagnose the inside of each of the combustion chambers of the engine 20 and sense the environment inside the combustion chambers while the engine 20 is driven, and are configured to diagnose and learn the driving conditions of the engine cylinders if stable conditions are secured. That is, the engine driving sensors 22 are configured to diagnose and learn the driving conditions of the corresponding engine cylinders in the state in which fuel is not injected and thus combustion is not performed in the combustion chambers in the overrun state. Therefore, the diagnosis and learning through the engine driving sensors 22 means that the engine driving sensors 22 performs diagnosis of performance of the engine 20 and offset learning of the engine 20 in the overrun state.

However, accuracy in diagnosis of the performance of the engine 20 and the offset learning performed through the engine driving sensors 22 is lowered in the state in which the LP-EGR system 100 is operated during coasting, and thus, the controller 200 individually performs control over inflow of exhaust gas into the exhaust line 10 and diagnosis and learning of the driving state of the engine 20 through the engine driving sensors 22 depending on the operation of the LP-EGR system 100.

The controller 200 according to the present disclosure is configured to recognize the coasting situation of the vehicle through an accelerator position sensor (APS: not shown), and to measure the temperature of fresh intake air introduced from the outside along the intake line 10 though the intake air temperature sensor 11. The controller 200 according to the present disclosure may be configured to recognize the situation, in which overrun of the engine 20 occurs in the state in which user input to an accelerator pedal is released, as the coasting situation of the vehicle.

Further, the controller 200 may be configured to operate the LP-EGR system 100 and to perform the diagnosis and learning of the driving state of the engine 20 through the engine driving sensors 22. Particularly, the controller 200 is configured to first perform the diagnosis and learning of the driving state of the engine 20 through the engine driving sensors 22 and then to operate the LP-EGR system 100, when the temperature of fresh intake air introduced along the intake line 10 is less than or equal to the first reference value and greater than the second reference value.

That is, the controller 200 is configured, in the coasting situation of the vehicle, to first perform the diagnosis and learning of the driving state of the engine 20 through the engine driving sensors 22 and then to operate the LP-EGR system 100 so as to prevent freezing of the intake line 10.

Further, the controller 200 is configured to stop the diagnosis and learning of the driving state of the engine 20 through the engine driving sensors 22, when the number of times of the diagnosis and learning of the driving state of the engine 20 through the engine driving sensors 22 exceeds a predetermined number. Therefore, the controller 200 operates the LP-EGR system 100 when the number of times of the diagnosis and learning of the driving state of the engine 20 through the engine driving sensors 22 exceeds the predetermined number even in the state in which the temperature of fresh intake air measured by the intake air temperature sensor 11 is less than or equal to the first reference value and greater than the second reference value.

On the contrary, the controller 200 is configured not to perform the diagnosis and learning of the driving state of the engine 20 through the engine driving sensors 22, and to operate the LP-EGR system 100, when the temperature measured by the intake air temperature sensor 1 is less than or equal to the second reference value. The reason for this is that, if an outdoor air temperature is determined to be in the extremely low temperature state, the LP-EGR system 100 must preferentially be operated so as to prevent freezing of the engine 20, and thereby, freezing of the intake line 10 may be prevented.

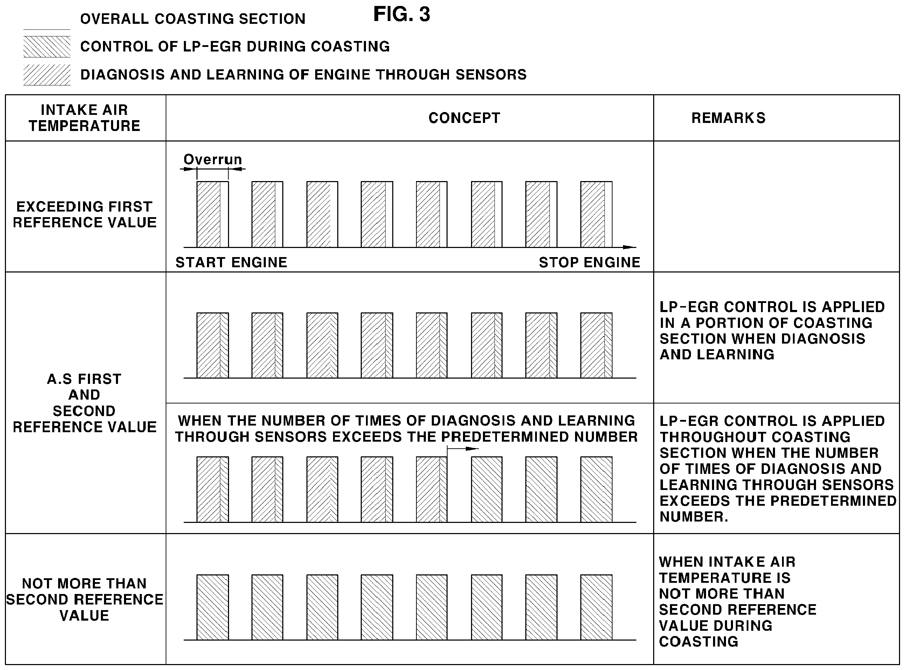

FIG. 3 is a view illustrating a point in time at which the diagnosis and learning of the driving state of the engine 20 through the engine driving sensors 22 are performed and a point in time at which the LP-EGR system 100 is operated depending on the intake air temperature according to one embodiment of the present disclosure.

As shown in FIG. 3, because an overrun section of the engine 20 may be regarded as the coasting situation of the vehicle, the controller 200 is configured to perform the diagnosis and learning of the driving state of the engine 20 through the engine driving sensors 22 in a coasting section at a temperature exceeding the first reference value.

However, in the low-temperature state in which the temperature of intake air (fresh intake air) measured by the intake air temperature sensor 11 is less than or equal to the first reference value and greater than the second reference value, the controller 200 is configured to perform the diagnosis and learning of the driving state of the engine 20 through the engine driving sensors 22 when the vehicle enters the coasting section, and then to operate the LP-EGR system 100 in the coasting section after the diagnosis and learning of the driving state of the engine 20 have been completed.

In this case, when the number of times of the diagnosis and learning of the driving state of the engine 20 through the engine driving sensors 22 exceeds the predetermined number, the controller 200 stops the diagnosis and learning of the driving state of the engine 20 and then operates the LP-EGR system 100 only in the remainder of the coasting section so as to prevent freezing of the intake line 10.

Thereby, delay in operation of the LP-EGR system 100 due to unnecessary diagnosis and learning of the driving state of the engine 20 may be prevented, and thus, a time taken to raise the temperature of the intake line 10 may be shortened and freezing of the intake line 10 may be prevented.

Further, in the extremely low-temperature state in which the temperature of intake air measured by the intake air temperature sensor 11 is less than or equal to the second reference value, the controller 200 increases the operating time of the LP-EGR system 100 in the coasting situation of the vehicle compared to the low-temperature state. Therefore, the temperature rising effect on the intake line 10 may be increased, and thereby, freezing of the intake line 10 and the intake system may be prevented even in the extremely low-temperature state.

That is, the controller 200 is configured to obviate the diagnosis and learning of the driving state of the engine 20 through the engine driving sensors 22 and to more actively operate the LP-EGR system 100 in the extremely low-temperature state so as to raise the temperature.

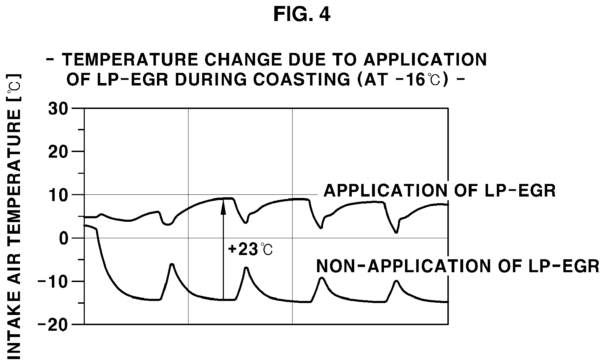

FIG. 4 is a graph showing data indicating the temperature rising effect on the intake line 10 into which fresh intake air is introduced through operation of the LP-EGR system 100 when the temperature of the fresh intake air is determined to be in the extremely low temperature state.

As shown in FIG. 4, when the LP-EGR system 100 is operated in the state in which the temperature of the fresh intake air introduced into the engine 20 is -16°C, the temperature of the intake line 10 is raised to 10°C at maximum.

Further, it may be confirmed that, as a result of continuous operation of the LP-EGR system 100 in a section in which coasting of the vehicle are performed, the temperature of the intake line 10 is raised compared to the initial temperature of the intake line 10 as a section in which the LP-EGR system 100 is operated increases.

That is, the controller 200 according to the present disclosure distinguishes the low-temperature state and the extremely low-temperature state from each other, and controls the LP-EGR system 100 so as to increase the operating time thereof during coasting of the vehicle in the extremely low-temperature state compared to the low-temperature state, thereby increasing the temperature rising effect on the intake line 10 in the extremely low-temperature state compared to the low-temperature state. Therefore, freezing of the intake line 10 and the intake system even in the extremely low-temperature state may be prevented.

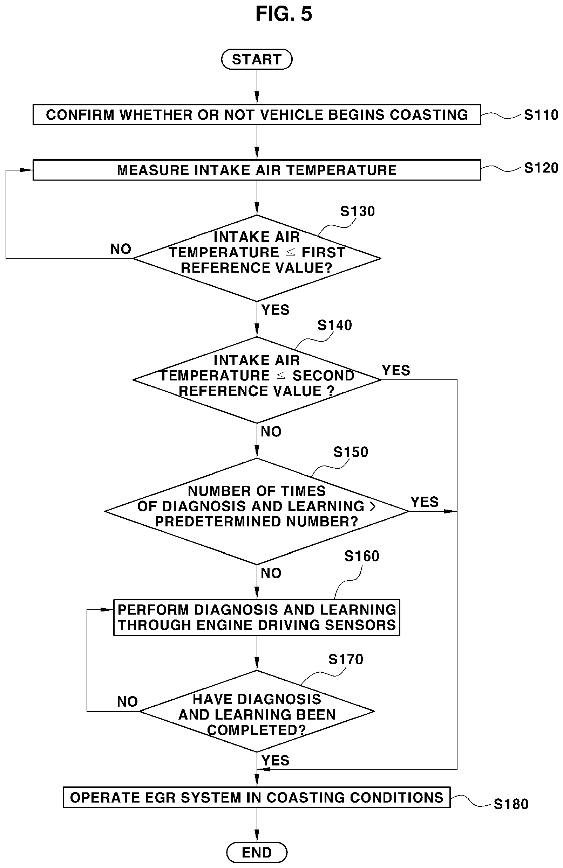

FIG. 5 is a flowchart illustrating a method for controlling the LP-EGR system 100 for freezing prevention according to one embodiment of the present disclosure.

The controller 200 confirms whether or not the vehicle begins coasting (S110). In one embodiment of the present disclosure, the controller 200 calculates a pedal effort through the APS, and determines that the vehicle begins coasting in the overrun state when the pedal effort is substantially zero.

Thereafter, the intake air temperature sensor 11 located on the intake line 10 measures an intake air temperature (S120). When the measured intake air temperature is less than or equal to the first reference value (Yes in S130) and greater than the second reference value (No in S140), the controller 200 performs diagnosis and learning of the driving state of the engine 20 through the engine driving sensors 22 (S160).

When the measured intake air temperature is greater than the first reference value, the intake air temperature is continuously measured (S120). Further, when the measured intake air temperature is less than or equal to the second reference value, the controller 200 operates the LP-EGR system 100 in the coasting condition (S180).

In performing the diagnosis and learning of the driving state of the engine 20 through the engine driving sensors 22 (S160), the controller 200 determines whether or not the number of times of the diagnosis and learning of the driving state of the engine 20 exceeds a number predetermined by the controller 200 (S150).

When the number of times of the diagnosis and learning of the driving state of the engine 20 is not more than the number predetermined by the controller 200, the controller 200 determines whether or not the diagnosis and learning of the driving state of the engine 20 has been completed (S170), and operates the LP-EGR system 100 in the remainder of the coasting section (S180).

On the other hand, when the number of times of the diagnosis and learning of the driving state of the engine 20 exceeds the number predetermined by the controller 200, the controller 200 does not perform the diagnosis and learning of the driving state of the engine 20 and operates the LP-EGR system 100 in the coasting section (S 180).

That is, in the present disclosure, in the low-temperature state, the diagnosis and learning of the driving state of the engine 20 are first performed and then the LP-EGR system 100 is operated when the diagnosis and learning of the driving state of the engine 20 have been completed, and, if the number of times of the diagnosis and learning of the driving state of the engine 20 exceeds the predetermined number, the LP-EGR system 100 is operated throughout the coasting section.

Further, in the present disclosure, in the extremely low-temperature state, the LP-EGR system 100 is operated throughout the coasting section regardless of the diagnosis and learning of the driving state of the engine 20, thereby being capable of preventing freezing of the intake line 10 and the intake system.

As is apparent from the above description, an apparatus and method for controlling an LP-EGR system for freezing prevention according to one embodiment of the present disclosure may have the following effects through the above-described configuration and connection and usage relationships.

The apparatus and method according to one embodiment of the present disclosure may prevent freezing of an intake line and thus improve durability of an intake system of an engine.

Further, the apparatus and method according to one embodiment of the present disclosure may raise the temperature of the intake line and the intake system in the state in which accuracy in diagnosis and learning of the driving state of the engine through engine driving sensors is maintained.

The disclosure has been described in detail with reference to preferred embodiments thereof. While the disclosure has been explained in relation to the embodiments thereof, it is to be understood that various modifications thereof will become apparent to those skilled in the art upon reading the specification. Therefore, it is to be understood that the disclosure disclosed herein is intended to cover such modifications as fall within the scope of the appended claims. That is, it will be appreciated by those skilled in the art that changes may be made in these embodiments without departing from the principles and spirit of the disclosure, the scope of which is defined in the appended claims and their equivalents.

## Claims

1. A method for controlling a low-pressure exhaust gas recirculation (LP-EGR) system for freezing prevention, the method comprising:
measuring, by an intake air temperature sensor, an intake air temperature during coasting of a vehicle;
determining, by a controller, whether or not the intake air temperature is less than or equal to a first reference value and greater than a second reference value;
performing, by the controller, diagnosis and learning of a driving state of an engine through engine driving sensors when the intake air temperature is less than or equal to the first reference value and greater than the second reference value; and
operating, by the controller, the LP-EGR system in a coasting section when the diagnosis and learning of the driving state of the engine through the engine driving sensors have been completed.

2. The method of claim 1, wherein performing the diagnosis and learning of the driving state of the engine through the engine driving sensors comprises:
determining whether or not a number of times of the diagnosis and learning of the driving state of the engine through the engine driving sensors exceeds a predetermined number after starting of the engine; and
completing measurement of the intake air temperature when the number of times of the diagnosis and learning of the driving state of the engine through the engine driving sensors exceeds the predetermined number.

3. The method of claim 1, wherein determining whether or not the intake air temperature is less than or equal to the first reference value and greater than the second reference value comprises:
operating the LP-EGR system when the intake air temperature is less than or equal to the second reference value.

4. An apparatus for controlling an LP-EGR system for freezing prevention, the apparatus comprising:
an intake air temperature sensor configured to measure a temperature of intake air introduced from outside;
at least one engine driving sensor used to diagnose and learn a driving state of an engine;
the LP-EGR system configured such that at least a portion of exhaust gas flows into the LP-EGR system as intake air; and
a controller configured to perform diagnosis and learning of the driving state of the engine using the at least one engine driving sensor or to operate the LP-EGR system depending on the temperature of the intake air measured by the intake air temperature sensor when coasting conditions of a vehicle are satisfied,
wherein the controller performs the diagnosis and learning of the driving state of the engine using the at least one engine driving sensor when the intake air temperature is less than or equal to a first reference value and greater than a second reference value, and operates the LP-EGR system in a state in which the diagnosis and learning of the driving state of the engine through the engine driving sensors have been completed.

5. The apparatus of claim 4, wherein the at least one driving sensor comprises at least one of an air flow sensor, an oxygen sensor, a NOx sensor, a mass air flow sensor or a lambda sensor.

6. The apparatus of claim 4 or 5, wherein the controller operates the LP-EGR system when the intake air temperature measured by the intake air temperature sensor is less than or equal to the second reference value.
